(19) Europäisches Patentamt
European Patent Office
Office européen des brevets

(11) EP 3 950 332 A1

(12) EUROPEAN PATENT APPLICATION
published in accordance with Art. 153(4) EPC

(43) Date of publication:
**09.02.2022 Bulletin 2022/06**

(21) Application number: **20779324.1**

(22) Date of filing: **12.03.2020**

(51) International Patent Classification (IPC):
***B32B 27/06*** *(2006.01)* ***C08K 5/00*** *(2006.01)*
***C08L 101/00*** *(2006.01)* ***C08L 101/12*** *(2006.01)*
***C08L 79/00*** *(2006.01)* ***B32B 15/08*** *(2006.01)*
***B32B 15/18*** *(2006.01)* ***H01B 1/12*** *(2006.01)*
***H01B 1/20*** *(2006.01)* ***H01B 5/02*** *(2006.01)*
***C23C 26/00*** *(2006.01)*

(52) Cooperative Patent Classification (CPC):
**B32B 15/08; B32B 15/18; B32B 27/06; C08K 5/00; C08L 79/00; C08L 101/00; C08L 101/12; C23C 26/00; H01B 1/12; H01B 1/20; H01B 5/02**

(86) International application number:
**PCT/JP2020/010857**

(87) International publication number:
**WO 2020/195905 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2019 JP 2019060942**
**18.12.2019 JP 2019227887**

(71) Applicant: **Idemitsu Kosan Co., Ltd.**
**Chiyoda-ku**
**Tokyo, 100-8321 (JP)**

(72) Inventors:
- **TOMAI, Shigekazu**
**Sodegaura-shi, Chiba 299-0293 (JP)**
- **SEINO, Yoshikatsu**
**Sodegaura-shi, Chiba 299-0293 (JP)**

(74) Representative: **Gille Hrabal Partnerschaftsgesellschaft mbB**
**Patentanwälte**
**Brucknerstraße 20**
**40593 Düsseldorf (DE)**

# (54) SOLUTION COMPOSITION CONTAINING CONDUCTIVE POLYMER

(57) A solution composition comprising a conductive polymer, a resin, and a solvent, and having an acid value of 0.0 to 14.5 mgKOH/g or having a base value of 0.0 to 1.0 mgHCl/g.

EP 3 950 332 A1

**Description**

Technical Field

The invention relates to a solution composition containing a conductive polymer.

Background Art

Solution compositions containing polyaniline and an epoxy resin as a coating film component have been known before (see, for example, Patent Document 1).

Further, a rust inhibitor which is a composition containing a compound having a hydrophobic group and a chelating group in the molecular structure and a liquid rubber is disclosed (see, for example, Patent Document 2).

Related Art Documents

Patent Documents

[Patent Document 1] JP 2007-324143 A1
[Patent Document 2] JP 2011-99152A1

Summary of the Invention

When a salt spray test (JIS Z 2371) is performed on a film formed by coating on a steel plate with a solution composition containing polyaniline and an epoxy resin as a coating film component as disclosed in Patent Document 1, rust is intensely generated. Therefore, there has been a demand for a solution composition capable of forming a film having higher rust inhibition performance.

It is an object of the invention to provide a solution composition capable of forming a film that can further reducing the generation of rust.

As a result of extensive studies to achieve the above object, the inventors have found that, by adjusting an acid value or a base value of the composition, the rust inhibition performance of the obtained film is remarkably increased, thereby completing the invention.

According to the invention, the following solution composition can be provided.

1. A solution composition comprising a conductive polymer, a resin, and a solvent, and having an acid value of 0.0 to 14.5 mgKOH/g or having a base value of 0.0 to 1.0 mgHCl/g.
2. The solution composition according to 1, wherein the conductive polymer is a polyaniline-based polymer.
3. The solution composition according to 2, wherein the polyaniline-based polymer is a substituted or unsubstituted polyaniline doped with a dopant.
4. The solution composition according to any one of 1 to 3, having a viscosity of 1000 cP or higher and 80000 cP or lower at 25°C.
5. The solution composition according to any one of 1 to 3, having a viscosity of 1000 cP or higher and 60000 cP or lower at 25°C.
6. The solution composition according to any one of 3 to 5, wherein the dopant is a sulfosuccinate derivative.
7. The solution composition according to any one of 1 to 6, wherein the resin is a thermosetting resin.
8. The solution composition according to 7, wherein the thermosetting resin is one or more kinds of resins selected from the group consisting of an alkyd resin, an unsaturated polyester, polyester, a melamine resin, polyisocyanate, an acrylic resin, a phenol resin, polyamine, polyurethane, and an epoxy resin.
9. The solution composition according to 7, wherein the thermosetting resin is polyurethane or an epoxy resin.
10. A film obtained from the solution composition according to any one of 1 to 9.
11. A metallic component comprising the film according to 10.
12. The metallic component according to 9, having a structure in which a steel material is coated with the film.

According to the invention, it is possible to provide a solution composition capable of forming a film that can further reducing the generation of rust.

Mode for Carrying out the Invention

The solution composition according to one embodiment of the invention contains a conductive polymer, a resin, and a solvent. The solution composition has an acid value of 0.0 to 14.5 mgKOH/g, or a base value of 0.0 to 1.0 mgHCl/g. By adjusting the acid value or the base value of the solution composition within the above range, in a film (cured film) formed by coating the solution composition of this embodiment, followed by drying, the conductive polymer is dissolved or uniformly dispersed in the resin as the matrix. This enables to reduce the generation of rust in the salt spray test, and to obtain a film having excellent rust inhibitor performance.

In this embodiment, the solution composition has the acid value of 0.0 to 14.5 mgKOH/g. When the acid value is 14.5 mgKOH/g or less (also including the case where the acid value is 0.0 mgKOH/g), corrosion of an object to be prevented from rust due to an acid can be reduced, so that the rust inhibition performance of the film can be increased. The add value is preferably 0.0 to 10.0 mgKOH/g, more preferably 0.0 to 8.0 mgKOH/g, and still more preferably 0.2 to 3.0 mgKOH/g.

On the other hand, the solution composition has the base value of 0.0 to 1.0 mgHCl/g. When the base value is 1.0 mgHCl/g or less (also including the case where the base value is 0.0 mgHCl/g), aggregation of the conductive polymer can be suppressed during the drying step after coating on an object to be prevented from rust, and uniformity of the film is increased. The base value is preferably 0.0 to 0.7 mgHCl/g, and more preferably 0.0 to 0.5 mgHCl/g.

The acid value is expressed in mg of potassium hydroxide (KOH) required to neutralize the acidic components contained in 1 g of the solution composition. The base value is expressed in mg of hydrochloric acid (HCl) required to neutralize the basic components contained in 1 g of the solution composition. The acid value and the base value are determined by neutralization titration of the solution composition.

When using a resin such as an epoxy resin, as a mixture of a main agent and a curing agent, the acid value and the base value are determined by neutralization titration of the solution composition excluding the curing agent.

The add value and the base value of the solution composition can be adjusted, for example, by a known method of introducing a functional group such as a hydroxyl group or a carboxyl group into the conductive polymer and/or the resin. Altematively, the acid value and the base value can be adjusted by the type and the amount of a dopant added, as described later.

In the invention, the term "conductive polymer" means a redox material having a redox potential of - 0.2 (V vs. SHE) or higher and 1.5 (V vs. SHE) or lower. The redox potential is measured by a method using a three-electrode system of a working electrode, a reference electrode and a counter electrode, in which an object substance (compound) is dispersed or dissolved in an electrolyte solution having a concentration of 0.1 mol/L of the supporting electrolyte, and the natural potential of the working electrode relative to the reference electrode is read. In this case, gold is used as the working electrode. The measurement temperature is set to be 23°C. If the object substance has poor solubility, the working electrode may be coated with the substance and immersed in the electrolyte solution. When a reference electrode other than the standard hydrogen electrode (SHE) is used, the potential relative to the hydrogen electrode potential (V vs. SHE) is obtained by subtracting, for example, 0.24V in the case of a saturated calomel electrode and 0.22V in the case of a silver chloride electrode from the potential measured, respectively(see the Electrochemistry Handbook, 4th edition, p. 77, edited by the Electrochemical Society of Japan.).

The redox potential of the conductive polymer may be - 0.2 (V vs. SHE) or higher, - 0.15 (V vs. SHE) or higher, - 0.1 (V vs. SHE) or higher, - 0.05 (V vs. SHE) or higher, or 0 (V vs. SHE) or higher, and may be 1.5 (V vs. SHE) or lower, 1.3 (V vs. SHE) or lower, 1.0 (V vs. SHE) or lower, or 0.8 (V vs. SHE) or lower.

Specific examples of the conductive polymer include polyacetylene-based polymers such as polyacetylene, polymethylacetylene, polyphenylacetylene, polyfluoroacetylene, polybutylacetylene, and polymethylphenylacetylene; polyphenylene-based polymers such as polyorthophenylene, polymetaphenylene, and polyparaphenylene; polypyrrole-based polymers such as polypyrrole, poly(3-methylpyrrole), poly(3-ethylpyrrole), poly(3-dodecylpyrrole), poly(3,4-dimethylpyrrole), poly(3-methyl-4-dodecylpyrrole), poly(N-methylpyrrole), poly(N-dodecylpyrrole), poly(N-methyl-3-methylpyrrole), poly(N-ethyl-3-dodecylpyrrole), and poly(3-carboxypyrrole); polythiophene-based polymers such as polythiophene, poly(3-methylthiophene), poly(3-ethylthiophene), poly(3,4-dimethylthiophene), poly(3,4-diethylthiophene), and poly(3,4-ethylenedioxythiophene); polyfuran; polyselenophene; polyisothianaphthene; polyphenylene sulfide; polyaniline-based polymers such as polyaniline, poly(2-methylaniline), poly(2-ethylaniline), and poly(2,6-dimethylaniline); polyphenylene vinylene, polythiophene vinylene, polyperinaphthalene, polyanthracene, polynaphthalene, polypyrene, polyazulene, and derivative of these resins.

The conductive polymer may be used alone or in combination of two or more kinds.

From the viewpoints of stability, reliability, ease of availability, and so on, the conductive polymer is preferably at least one selected from the group consisting of a polypyrrole-based polymer, a polythiophene-based polymer, and a polyaniline-based polymer, and a polyaniline-based polymer is further preferred. The polyaniline-based polymer is preferably a substituted or unsubstituted polyaniline.

A method for producing a conductive polymer is not particularly limited, and a conventionally known method

can be employed. Specific examples of the production method include, for example, a chemical polymerization method, an electrolytic polymerization method, a soluble precursor method, a matrix (template) polymerization method, and a chemical vapor deposition method (CVD or the like). As the conductive polymer, a commercially available product may be used.

In one embodiment, the conductive polymer may be doped with a dopant. By adding and doping the dopant to the conductive polymer, the acid value and the base value of the solution composition can be appropriately and easily adjusted.

The dopant doping to the conductive polymer can be confirmed by ultraviolet/visible/near-infrared spectroscopy or X-ray photoelectron spectroscopy.

Specific examples of the dopant include halogen ions such as a chloride ion, a bromide ion, and an iodide ion; a perchlorate ion; a tetrafluoroborate ion; an arsenate hexafluoride ion; a sulfate ion; a nitrate ion; a thiocyanate ion; a silicate hexafluoride ion; phosphate-based ions such as a phosphate ion, a phenyl phosphate ion, and a hexafluoride phosphate ion; a trifluoroacetate ion; alkylbenzenesulfonate ions such as a tosylate ion, an ethylbenzenesulfonate ion, and a dodecylbenzenesulfonate ion; alkylsulfonate ions such as a methylsulfonate ion, an ethylsulfonate ion, and an ion of a sulfosuccinate derivative; a dibenzofuran sulfonate ion, a naphthalene sulfonate ion; polymer ions such as a polyacrylate ion, a polyvinyl sulfonate ion, a polystyrene sulfonate ion, and a poly(2-acrylamide-2-methylpropanesulfonate) ion. In addition to the above ions, an un-ionized element or compound may be contained in the dopant.

The dopant may be used alone or in combination of two or more.

Among the above dopants, sulfosuccinate derivatives (including their ions) such as polystyrenesulfonic acid and di(2-ethylhexyl)sulfosuccinic acid are more preferred because they result in higher solubility.

The amount of the dopant doped to the conductive polymer is preferably from 0.1 to 1.0, more preferably from 0.15 to 0.75, as expressed in terms of a dopant ratio (molar ratio of dopant/monomer unit constituting the conductive polymer).

The dopant ratio refers to the molar ratio of dopant (counter anion) to monomer unit constituting the conductive polymer. For example, a polyaniline complex containing unsubstituted polyaniline and a dopant having a dopant ratio of 0.5, means that one dopant is doped for two monomer unit molecules of polyaniline.

The dopant ratio can be calculated if the number of moles of the dopant and the number of moles of the monomer units constituting polyaniline in the polyaniline complex can be measured. For example, when the dopant is an organic sulfonic acid, the number of moles of sulfur atom derived from the dopant and the number of moles of nitrogen atom derived from the monomer unit of polyaniline can be quantified by an organic element analytical method, and the dopant ratio can be calculated by determining the ratio of these values. However, the method of calculating the dopant ratio is not limited to this method.

In the invention, a "resin" means a polymer material which does not have a redox function, or which has a redox potential outside the range of - 0.2 (V vs. SHE) or higher and 1.5 (V vs. SHE) or lower.

The resin is not particularly limited as long as it can be soluble in a solvent, and is preferably a thermosetting resin. The thermosetting resin is increased in hardness, weather resistance, chemical resistance, oxygen blocking property, and the like, due to its network structure created by a chemical reaction between resin molecules or between resin and a curing agent Further, the thermosetting resin has a relatively low molecular weight and is easy to handle.

Examples of the thermosetting resin include an alkyd resin, an unsaturated polyester, polyester, a melamine resin, polyisocyanate, an acrylic resin, a phenol resin, polyamine, polyurethane, and an epoxy resin.

The epoxy resin is used as a blend of a main agent with a curing agent. As the main agent, a bisphenol A type, a bisphenol F type, a phenol novolac type, and amines, and as the curing agent, an acid anhydride type, an alicyclic amine type, a phenol type, a ketimine type, an imidazole type, and the like are used in combination as appropriate. In particular, when high temperature resistance is required, a combination of tetraglycidylaminodiphenylmethane as the main agent and diaminophenylsulfone as the curing agent is preferred.

The thermosetting resin may be used alone or in combination of two or more kinds. When the thermosetting resin is used alone, polyurethane is preferred. When two or more thermosetting resins are used, they can be appropriately selected from combinations of polyester and a melamine resin, polyester and polyisocyanate, an acrylic resin and a melamine resin, an acrylic resin and polyisocyanate, an epoxy resin and polyamine, and the like, depending on the use, the use site, and the use environment. For example, an epoxy resin is inferior in weather resistance, but has good adhesiveness to metal so that it is suitable for undercoating. An acrylic resin and polyester are excellent in both gloss and weather resistance, so that they are suitable for overcoating.

The solution composition of this embodiment preferably contains the above-mentioned resin in the range of 500 to 100000 parts by mass, and more preferably in the range of 1000 to 10000 parts by mass, relative to 100 parts by mass of the conductive polymer. By the use of the resin in the above-mentioned range, a good film can be formed to exhibit excellent rust inhibition performance.

The molecular weight of the conductive polymer used in this embodiment is preferably in a range of 5000 to 75000. By setting the molecular weight of the conductive polymer to 5000 or more, reversibility of redox can be maintained

and rust inhibition ability can be sustained. Further, by setting the molecular weight of the conductive polymer to 75000 or less, the solubility to a solvent can be maintained and the rust inhibition ability can be sustained. The molecular weight of the conductive polymer is more preferably in a range of 10000 to 60000, and still more preferably in a range of 15000 to 55000.

The solvent is not particularly limited as long as it is a solvent which dissolves or disperses the above-described conductive polymer and resin. Examples of the solvent include:

water;
aliphatic hydrocarbon-based solvents such as gas oil, kerosene, n-pentane, iso-pentane, n-hexane, iso-hexane, n-heptane, iso-heptane, 2,2,4-trimethylpentane, n-octane, and iso-octane;
aromatic hydrocarbon-based solvents such as benzene, toluene, xylene, phenol, anisole, benzoic acid, and hydrogenated paraffin;
monoalcohol-based solvents such as methanol, ethanol, n-propanol, iso-propanol, n-butanol, isobutanol, sec-butanol, tert-butanol, n-pentanol, iso-pentanol, 2-methylbutanol, sec-pentanol, tert-pentanol, 3-methoxybutanol, 3-methoxy-3-methyl-1-butanol, n-hexanol, 2-methylpentanol, sec-hexanol, 2-ethylbutanol, sec-heptanol, 3-heptanol, n-octanol, 2-ethylhexanol, sec-octanol, n-nonyl alcohol, 2,6-dimethyl-4-heptanol, n-decanol, sec-undecyl alcohol, trimethylnonyl alcohol, sec-tetradecyl alcohol, sec-heptadecyl alcohol, phenol, cyclohexanol, methylcyclohexanol, 3,3,5-trimethylcyclohexanol, benzyl alcohol, phenylmethylcarbinol, diacetone alcohol, and cresol;
polyhydric alcohol-based solvents such as ethylene glycol, 1,2-propylene glycol, 1,3-butylene glycol, 2,4-pentanediol, 2-methyl-2,4-pentanediol, 2,5-hexanediol, 2,4-heptanediol, 2-ethyl-1,3-hexanediol, diethylene glycol, dipropylene glycol, triethylene glycol, tripropylene glycol, and glycerin;
ketone-based solvents such as acetone, methyl ethyl ketone, methyl n-propyl ketone, methyl n-butyl ketone, diethyl ketone, methyl iso-butyl ketone, methyl n-pentyl ketone, ethyl n-butyl ketone, methyl n-hexyl ketone, di-iso-butyl ketone, trimethyl nonanone, cyclohexanone, methylcyclohexanone, 2,4-pentanedione, acetonylacetone, diacetone alcohol, acetophenone, and fenchone;
ether-based solvents such as diethyl ether, di-iso-propyl ether, di-n-butyl ether, di-n-hexyl ether, bis(2-ethylhexyl) ether, ethylene oxide, 1,2-propylene oxide, dioxolane, 4-methyldioxolane, dioxane, dimethyldioxane, ethylene glycol monomethyl ether, ethylene glycol monoethyl ether, ethylene glycol diethyl ether, ethylene glycol monopropyl ether, ethylene glycol mono-n-butyl ether, ethylene glycol mono-n-hexyl ether, ethylene glycol monophenyl ether, ethylene glycol mono-phenoxy ether, ethylene glycol mono-2-ethylbutyl ether, ethylene glycol dibutyl ether, diethylene glycol monomethyl ether, diethylene glycol monoethyl ether, diethylene glycol diethyl ether, ethylene glycol mono-tert-butyl ether, ethylene glycol mono-isobutyl ether, diethylene glycol mono-n-butyl ether, diethylene glycol di-n-butyl ether, diethylene glycol mono-n-hexyl ether, ethoxytriglycol, tetraethylene glycol di-n-butyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, tripropylene glycol monomethyl ether, tetrahydrofuran, and 2-methyltetrahydrofuran;
ester-based solvents such as diethyl carbonate, methyl acetate, ethyl acetate, γ-butyrolactone, γ-valerolactone, n-propyl acetate, iso-propyl acetate, n-butyl acetate, iso-butyl acetate, sec-butyl acetate, n-pentyl acetate, sec-pentyl acetate, 3-methoxybutyl acetate, methylpentyl acetate, 2-ethylbutyl acetate, 2-ethylhexyl acetate, benzyl acetate, cyclohexyl acetate, methylcydohexyl acetate, n-nonyl acetate, methyl acetoacetate, ethyl acetoacetate, ethylene glycol monomethyl ether acetate, ethylene glycol monoethyl ether acetate, diethylene glycol monomethyl ether acetate, diethylene glycol monoethyl ether acetate, diethylene glycol mono-n-butyl ether acetate, propylene glycol monomethyl ether acetate, propylene glycol monoethyl ether acetate, propylene glycol monopropyl ether acetate, propylene glycol monobutyl ether acetate, dipropylene glycol monomethyl ether acetate, dipropylene glycol monoethyl ether acetate, glycol diacetate, methoxytriglycol acetate, ethyl propionate, n-butyl propionate, iso-amyl propionate, diethyl oxalate, di-n-butyl oxalate, methyl lactate, ethyl lactate, n-butyl lactate, n-amyl lactate, diethyl malonate, dimethyl phthalate, and diethyl phthalate; and
nitrogen-containing solvents such as N-methylformamide, N,N-dimethylformamide, N,N-diethylformamide, acetamido, N-methylacetamido, N, N-dimethylacetamide, N-methylpropionamido, and N-methylpyrrolidone; and sulfur-containing solvents such as dimethyl sulfide, diethyl sulfide, thiophene, tetrahydrothiophene, dimethylsulfoxide, sulfolane, and 1,3-propanesultone.

From the viewpoint of the storage stability, ease of handling, and ease of availability, among the above solvents, n-butanol, 3-methoxy-3-methyl-1-butanol, ethylene glycol monopropyl ether, ethylene glycol monophenoxy ether, propylene glycol monobutyl ether, ethylene glycol mono-n-butyl ether, ethylene glycol mono-tert-butyl ether, ethylene glycol mono-isobutyl ether, diethylene glycol monomethyl ether, diethylene glycol monoethyl ether, and N,N-dimethylformamide are preferable, and propylene glycol monobutyl ether, ethylene glycol mono-n-butyl ether, ethylene glycol mono-tert-butyl ether, and ethylene glycol mono-isobutyl ether are more preferable.

When a solvent having high polarity such as water is used, an appropriate conductive polymer and a resin are selected depending upon the polarity of the solvent, respectively. For example, when water is used as a solvent, a water-soluble acrylic resin and a water-soluble polyester resin can be used as the resin. Emulsified conventional oil-soluble resins can also be used. As the conductive polymer, polythiophene-based polymers such as poly(3,4-ethylenedioxythiophene)-poly(styrenesulfonic acid) (PEDOT-PSS) is preferred in view of excellent solubility. In particular, a self-doped polythiophene having a structural unit represented by the following formula (1) is preferred because of its excellent in the ability of maintaining water solubility.

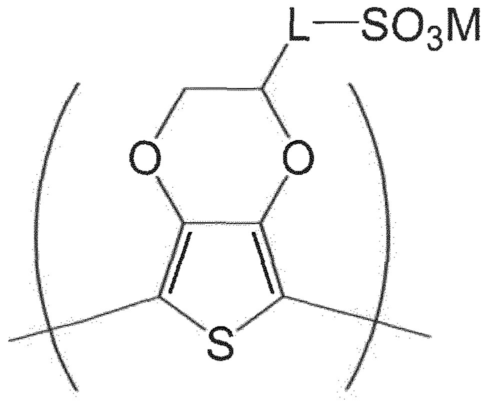

(1)

In the formula (1), L is a divalent group represented by the following formula (2) or formula (3), M is a hydrogen atom, an alkali-metal atom, or $NH(R^1)_3$; $R^1$'s are independently a hydrogen atom, or a substituted or unsubstituted alkyl group including 1 to 6 carbon atoms.

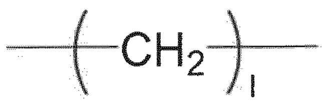

(2)

In the formula (2), l is an integer of 6 to 12.

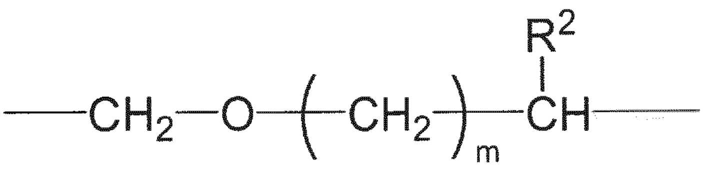

(3)

In the formula (3), m is an integer of 1 to 6, and $R^2$ is a hydrogen atom, a linear or branched alkyl group including 1 to 6 carbon atoms, or fluorine atom.

The solvent may be used alone or in combination of two or more kinds.

The amount of the solvent in the solution composition of this embodiment can be appropriately adjusted depending on the type of the conductive polymer, the resin, and arbitrary additives, the viscosity of the solution composition, and the like. Normally, the solvent is preferably contained in a range of 20 to 100000 parts by mass, and more preferably in a range of 100 to 10000 parts by mass, relative to 100 parts by mass of the conductive polymer.

The solution composition of this embodiment may contain, in addition to the above-mentioned conductive polymer, resin and solvent, known additives such as a colored pigment, a plasticizer, a pigment dispersant, an emulsifier, a thickener, a scattering inhibitor, and a leveling agent within a range that does not adversely affect the rust inhibition performance.

The solution composition of the invention consists essentially of a conductive polymer, a resin and a solvent, and arbitrarily one or more additives selected from the group consisting of a colored pigment, a plasticizer, a pigment dispersant, an emulsifier, a thickener, and a scattering inhibitor, and may contain other unavoidable impurities within a range not impairing the effects of the invention.

For example, 90 to 100% by mass, 95 to 100% by mass, 99 to 100% by mass, 99.5 to 100% by mass, from 99.9 to 100% by mass, or 100% by mass of the composition of the invention may be occupied by the conductive polymer,

the resin, and the solvent, or the conductive polymer, the resin, the solvent, and the additives.

The solution composition of this embodiment can be easily produced by mixing and stirring the above-described conductive polymer, resin, solvent, and arbitrarily additives. When using a resin such as an epoxy resin, which is used by mixing a main agent and a curing agent, a conductive polymer can be used after being added to the main agent in advance. For mixing and stirring, for example, a stirring device such as Despa (trade name) manufactured byASADA IRON WORKS.CO.,LTD., Hyper (trade name) manufactured byAshizawa Finetech Ltd., and AWATORI RENTARO (trade name) manufactured by THINKY CORPORATION can be used.

The solution composition of this embodiment can form a film by coating an object to be prevented from rust, for example, metals such as a steel plate, followed by subjecting to drying or curing treatment. The obtained film has excellent rust inhibition performance.

The coating can be performed, for example, by spraying, air spraying, brushing, roller coating, or the like. Further, the solution composition may be dispersed in water to perform electrodeposition plating.

After coating, the solution composition becomes a film dried by natural drying, heat drying, or the like. When a thermosetting resin is used as the resin, it may be cured by heating. The curing condition may be appropriately set in accordance with the type of the thermosetting resin used.

Note that in the film, the conductive polymer may be dissolved in the resin or may be dispersed in the resin. The conductive polymer is preferable to be dissolved in the resin, from the viewpoint of rust inhibition performance. The states of dissolving and dispersing in the resin may coexist.

From the viewpoint of rust inhibition performance, the thickness of the film is preferably 15 to 60 μm in the dry state. When the thickness of the film is 15 μm or more, the film is hardly affected by the permeation of oxygen and water, and the progress of rust is hardly accelerated. Further, when the thickness of the film is 60 μm or less, cracks caused by temperature changes due to the difference in the linear expansion coefficients between the film and the object to be prevented from rust are less likely to occur.

The film of this embodiment is suitable as a coating film for a metallic component such as a steel material because of its rust inhibition performance. For example, a metallic component having a structure in which a steel material is coated with the film has excellent rust inhibition performance on the coated surface.

The metallic component of this embodiment may be further provided with a topcoat layer on top of the film. The topcoat layer is preferably formed of, for example, a urethane-based resin so as to have a thickness of 15 to 60 μm.

Further, the viscosity of the solution composition of this embodiment is preferably 1000 cP or higher and 100000 cP or lower, more preferably 1000 cP or higher and 80000 cP or lower, still more preferably 1000 cP or higher and 70000 cP or lower, and particularly preferably 1000 cP or higher and 60000 cP or lower, at room temperature, specifically at 25°C. When the viscosity is 1000 cP or higher, the solution composition is less likely to flow after coating, and a preferable film thickness of 15 to 60 μm can be maintained. Further, when the viscosity is 100000 cP or lower, the leveling ability after coating does not decrease, and the surface morphology is less likely to be uneven. In this case, the moisture and salt that cause rust are less likely to stay on the surface, and the rusting process is less likely to be accelerated.

In the case where a resin such as an epoxy resin, which is used by mixing a main agent and a curing agent is used, the viscosity of the solution composition is measured for the solution composition excluding the curing agent.

In one embodiment of the invention, the solution composition can be used as a rust inhibitor. An applicable target of the rust inhibitor is not particularly limited, as long as it is needed to be prevented from corrosion. Examples of the applicable target include, for example, building structures such as houses, buildings, bridges, plants, tanks (e.g., petroleum tanks, natural gas tanks), roads, steel towers for power transmission and communications; transportation media such as ships, vehicles (e.g., railroad vehicles, large vehicles, small vehicles, hybrid vehicles, electric vehicles), aircraft, and rockets; metallic parts such as electric wires, cables, connectors, and bodies in vehicles such as automobiles, and high voltage power cables; metallic parts such as electric or electronic apparatus components; etc.

Examples of the application site of the connector include, for example, a terminal crimp portion. In the terminal crimp portion, the terminal and the electric wire may be made of the same metal, also may be made of different metals.

In addition, the film formed from the solution composition of one embodiment of the invention can be suitably used as a vaporizable anti-rust film, a paint type peelable plastic film, or a hot immersion type plastic film.

## Examples

### Example 1

(1) Preparation of polyaniline doped with dopant (polyaniline complex)

35.0 g of Aerosol OT (sodium di(2-ethylhexyl)sulfosuccinate, purity: 75% or higher, manufactured by FUJIFILM Wako Pure Chemical Corporation) and 1.47 g of Sorbon T-20 (a nonionic emulsifier having a polyoxyethylene sorbitan fatty acid ester structure, manufactured by Toho Chemical Industry Co., Ltd.) were dissolved in 600 mL of toluene to

prepare a solution.

The resulting solution was put into a 6 L separable flask placed under a nitrogen stream, and 22.2 g of aniline was added thereto. Then, 1800 mL of 1 mol/L phosphoric acid aqueous solution was added thereto, and the solution was cooled to 5°C. The solution had two liquid phases of toluene and water.

Immediately after the temperature of the solution became 5°C, the solution was stirred at 390 rotations per minute. To the solution after stirring, a solution of ammonium persulfate, in which 65.7 g of ammonium persulfate was dissolved in 600 mL of 1 mol/L phosphoric acid, was added dropwise over a period of 2 hours using a dropping funnel under stirring. For 18 hours from the start of the dropwise addition, the solution was stirred while keeping the internal temperature of the solution at 5°C. Then, the solution temperature was increased up to 40°C and was stirred for an additional 1 hours. After stirring, the solution was left to separate into two phases. The aqueous phase was separated and the organic phase was collected.

To the obtained organic phase, 1500 mL of toluene was added, and the mixture was washed once with 600 mL of 1 mol/L phosphoric acid and 3 times with 600 mL of ion-exchanged water. The insoluble matter was removed by filtration using a #5C filter paper to obtain a toluene solution of a polyaniline complex.

The obtained toluene solution was transferred to an evaporator, and the volatiles were distilled off under reduced pressure while being warmed in a hot water bath at 60°C, to obtain 43.0 g of a powdery polyaniline complex (molecular weight: 60000).

The weight-average molecular weight of the polyaniline was 60000. The molecular weight was determined by the polystyrene conversion method using a gel permeation chromatography (GPC).

The dopant ratio of the polyaniline complex [(number of moles of dopant doped into polyaniline)/(number of moles of monomer unit of polyaniline)] was 0.63.

The dopant ratio was calculated from the number of moles of dopant and the number of moles of monomer units of the polyaniline in the polyaniline complex. Specifically, the number of moles of sulfur atoms derived from the dopant and the number of moles of nitrogen atoms derived from the monomer unit of the polyaniline were quantified by an organic element analytical method, and the dopant ratio was calculated by taking the ratio of these values.

(2) Preparation of solution composition

1 g of the polyaniline complex obtained in (1) above was weighed and charged into 9 g of propylene glycol monobutyl ether with stirring to obtain a 10 % by mass polyaniline complex solution. Subsequently, 90 mL of DAIFERAMINE (manufactured by Dainichiseika Color & Chemicals Mfg. Co., Ltd., a γ-butyrolactone solution of 30 % by mass polyurethane) which is a resin solution, was added to the polyaniline complex solution, and the mixture was stirred for 5 minutes at 2000 rpm using a planetary centrifugal stirrer (manufactured by THINKY CORPORATION, ARE-250) to prepare a solution composition.

The acid value or base value of the obtained solution composition was determined using a potentiometric titration method. AT-500 manufactured by KYOTO ELECTRONICS MANUFACTURING CO., LTD. was used as the measuring device, and an inflection point of the obtained potential difference was defined as an end point. The acid value was determined by the following expression using potassium hydroxide as the titrant.

$$\text{Acid value (mgKOH/g)} = (V1-V0) \times N \times f \times M/S$$

In the expression, V1 is the titration amount (mL) in this test, V0 is the titration amount (mL) in the blank test, N is the concentration (mol/L) of the titrant, f is the factor of the titrant (1.010), M is the molar mass (g/mol) of the titrant, and S is the sample mass (g).

The base value was measured in the same manner as the acid value, except that hydrochloric acid was used as the titrant.

The measurement results are shown in Table 1,

As well, the viscosity of the resulting solution composition was measured using a digital viscometer at 25°C. DV2T manufactured by Brookfield Corporation was used as the measuring device to measure the viscosity at a rotational speed of 1 rpm. The measurement results are shown in Table 1.

(3) Film formation

The solution composition obtained in (2) above was sucked up with an eyedropper and applied to an SPC steel plate using a film coater (manufactured by TESTER SANGYO CO., LTD., PI-1210). Then, the applied plate was dried for 2 hours at 80°C in air to obtain a metallic component having a film thickness of 30 μm.

The obtained metallic component with a film was subjected to an environmental cycle test under the following

conditions, and the rust generation was observed.

Brine spraying: NaCl solution (concentration: 5 % by mass) at 35°C sprayed for 2 hours
Drying: Dried in air at a temperature of 60°C and humidity of 20 to 30 RH% for 4 hours
Wetting: Allowed to stand for 2 hours in air at a temperature of 50°C and humidity of 95 RH% or more.

The above brine spraying, drying and wetting were set to 1 cycle, and 30 cycles (10 days) were performed. The percentage of the area of rust covering the sample surface was measured for the sample after the environmental cycle test.

The results are shown in Table 1.

Table 1

| | Molecular weight of PANI | Dopant | Dopant ratio | Resin used | Acid value | Base value | Area ratioof rust | Viscosity | Thickness |
|---|---|---|---|---|---|---|---|---|---|
| Example 1 | 60000 | AOT | 0.63 | PU | 9.8 | - | 2% | 20000 | 24.8 |
| Example 2 | 60000 | AOT | 0.32 | PU | 2 | - | 2% | 10000 | 19.9 |
| Example 3 | 20000 | NSA | 0.53 | PU | 3 | - | 2% | 11000 | 24.5 |
| Example 4 | 20000 | NSA | 0.26 | PU | 1.2 | - | 2% | 29000 | 20.2 |
| Example 5 | 5000 | NSA | 0.53 | PU | 5.5 | - | 2% | 2100 | 19.5 |
| Example 6 | 5000 | NSA | 0.26 | PU | 2 | - | 2% | 1900 | 19.6 |
| Example 7 | 20000 | - | 0 | PU | - | 0.5 | 5% | 7500 | 22.6 |
| Example 8 | 20000 | phosphoric acid | 0.15 | PU | 2.5 | - | 3% | 4000 | 20.2 |
| Example 9 | 60000 | AOT | 0.63 | EP | 7.5 | - | 1% | 15000 | 19.8 |
| Example 10 | 75000 | NSA | 0.96 | PU | 12.2 | - | 30% | 75000 | 17.4 |
| Example 11 | 20000 | NSA | 0.96 | PU | 12.7 | - | 20% | 59000 | 27.6 |
| Example 12 | 5000 | NSA | 0.96 | PU | 14.1 | - | 10% | 4000 | 27.0 |
| Example 13 | 60000 | AOT | 0.63 | PU | 9.8 | - | 5% | 20000 | 20.0 |
| Example 14 | 60000 | AOT | 0.63 | PU | 9.8 | - | 7% | 20000 | 20.0 |
| Example 15 | 60000 | AOT | 0.63 | PU | 9.8 | - | 1% | 20000 | 20.0 |
| Comp. Ex. 1 | 60000 | AOT | 0.63 | PU | 15 | - | 40% | >90000 | 20.2 |
| Comp. Ex. 2 | 5000 | NaOH | 0.32 | PU | - | 3.5 | 55% | 3000 | 25.3 |

(continued)

| | Molecular weight of PANI | Dopant | Dopant ratio | Resin used | Acid value | Base value | Area ratioof rust | Viscosity | Thickness |
|---|---|---|---|---|---|---|---|---|---|
| Comp. Ex. 3 | Not blended | - | - | - | 2 | - | 80% | 15000 | 24.3 |
| In the table, AOT means Aerosol OT, NSA means naphthalene sulfonic acid, PU means polyurethane, and EP means epoxy. The unit of the acid value is "mgKOH/g," the unit of the base value is "mgHCl/g," the unit of the viscosity is "cP," and the unit of the thickness is "μm." | | | | | | | | | |

Example 2

A solution composition was prepared and evaluated in the same manner as in Example 1, except that the amount of Aerosol OT used was changed to 17.8 g. The results are shown in Table 1.

Example 3

After dissolving 2.22 g of polyaniline (manufactured by Sigma-Aldrich Co. LLC, molecular weight: 20000) in 40 mL of N-methylpyrrolidone, 1.37 g of naphthalene sulfonic acid (manufactured by Tokyo Chemical Industry Co., Ltd.) was added to the solution, and the mixture was stirred to obtain a polyaniline complex.

Preparation of the solution composition, film formation and evaluations were carried out in the same manner as in Example 1. The results are shown in Table 1.

Example 4

A solution composition was prepared and evaluated in the same manner as in Example 3, except that the amount of naphthalene sulfonic acid used was changed to 0.67 g. The results are shown in Table 1.

Example 5

A solution composition was prepared and evaluated in the same manner as in Example 3, except that 2.22 g of polyaniline (manufactured by Sigma-Aldrich Co. LLC, molecular weight: 5000) was used, and the amount of naphthalene sulfonic acid used was changed to 1.37 g. The results are shown in Table 1.

Example 6

A solution composition was prepared and evaluated in the same manner as in Example 5, except that the amount of naphthalene sulfonic acid used was changed to 0.67 g. The results are shown in Table 1.

Example 7

A solution composition was prepared and evaluated in the same manner as in Example 3, except that no naphthalene sulfonic acid was used. The results are shown in Table 1.

Example 8

A solution composition was prepared and evaluated in the same manner as in Example 3, except that 0.18 g of phosphoric acid having a concentration of 99% was used in place of naphthalenesulfonic acid. The results are shown in Table 1.

Example 9

A solution composition was prepared and evaluated in the same manner as in Example 1, except that 90 mL of an epoxy resin solution (ARAKYD 9205, manufactured by Arakawa Chemical Industries, Ltd., a solution containing 40 % by mass of epoxy) was used in place of DAIFERAMINE (a γ-butyrolactone solution of 30 % by mass polyurethane)

which is a resin solution. The results are shown in Table 1.

Example 10

A polyaniline complex was obtained in the same manner as in Example 3, except that polyaniline (REGULUS, molecular weight: 75000), manufactured by KAKEN SANGYOU CORPORATION, was used, and the amount of naphthalene sulfonic acid added was changed to 2.48 g. Preparation of the solution composition, film formation and evaluations were carried out in the same manner as in Example 1. The results are shown in Table 1.

Example 11

After dissolving 2.22 g of polyaniline (manufactured by Sigma-Aldrich Co. LLC, molecular weight: 20000) in 40 mL of N-methylpyrrolidone, 2.48 g of naphthalene sulfonic acid (manufactured by Tokyo Chemical Industry Co., Ltd.) was added to the solution, and the mixture was stirred to obtain a polyaniline complex. Preparation of the solution composition, film formation and evaluations were carried out in the same manner as in Example 1. The results are shown in Table 1.

Example 12

After dissolving 2.22 g of polyaniline (manufactured by Sigma-Aldrich Co. LLC, molecular weight: 5000) in 40 mL of N-methylpyrrolidone, 2.48 g of naphthalene sulfonic acid (manufactured by Tokyo Chemical Industry Co., Ltd.) was added to the solution, and the mixture was stirred to obtain a polyaniline complex. Preparation of the solution composition, film formation and evaluations were carried out in the same manner as in Example 1. The results are shown in Table 1.

Example 13

A metalic component with a film was obtained and evaluated in the same manner as in Example 1, except that an aluminum plate (A6061) was used in place of the SPC steel plate. The results are shown in Table 1.

Example 14

A metallic component with a film was obtained and evaluated in the same manner as in Example 1, except that a galvanized steel plate was used in place of the SPC steel plate. The results are shown in Table 1.

Example 15

A metallic component with a film was obtained and evaluated in the same manner as in Example 1, except that a tin-plated copper plate was used in place of the SPC steel plate. The results are shown in Table 1.

Comparative Example 1

A solution composition was prepared and evaluated in the same manner as in Example 1, except that the amount of Aerosol OT used was changed to 200 g. The results are shown in Table 1.

Comparative Example 2

A solution composition was prepared and evaluated in the same manner as in Example 5, except that 5 g of sodium hydroxide was used in place of naphthalenesulfonic acid. The results are shown in Table 1.

Comparative Example 3

A film was formed and evaluated in the same manner as in Example 1, except that DAIFERAMINE (a γ-butyrolactone solution of 30 % by mass polyurethane) which is a resin solution was used in place of the polyaniline complex solution. The results are shown in Table 1.
Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly,

all such modifications are intended to be included within the scope of this invention.

The documents described in the specification and the specification of Japanese application(s) on the basis of which the present application claims Paris convention priority are incorporated herein by reference in its entirety.

## Claims

1. A solution composition comprising a conductive polymer, a resin, and a solvent, and having an acid value of 0.0 to 14.5 mgKOH/g or having a base value of 0.0 to 1.0 mgHCl/g.

2. The solution composition according to claim 1, wherein the conductive polymer is a polyaniline-based polymer.

3. The solution composition according to claim 2, wherein the polyaniline-based polymer is a substituted or unsubstituted polyaniline doped with a dopant.

4. The solution composition according to any one of claims 1 to 3, having a viscosity of 1000 cP or higher and 80000 cP or lower at 25°C.

5. The solution composition according to any one of claims 1 to 3, having a viscosity of 1000 cP or higher and 60000 cP or lower at 25°C.

6. The solution composition according to any one of claims 3 to 5, wherein the dopant is a sulfosuccinate derivative.

7. The solution composition according to any one of claims 1 to 6, wherein the resin is a thermosetting resin.

8. The solution composition according to claim 7, wherein the thermosetting resin is one or more kinds of resins selected from the group consisting of an alkyd resin, an unsaturated polyester, polyester, a melamine resin, polyisocyanate, an acrylic resin, a phenol resin, polyamine, polyurethane, and an epoxy resin.

9. The solution composition according to claim 7, wherein the thermosetting resin is polyurethane or an epoxy resin.

10. A film obtained from the solution composition according to any one of claims 1 to 9.

11. A metallic component comprising the film according to claim 10.

12. The metallic component according to claim 11, having a structure in which a steel material is coated with the film.

**INTERNATIONAL SEARCH REPORT**

International application No. PCT/JP2020/010857

A. CLASSIFICATION OF SUBJECT MATTER
B32B 27/06(2006.01)i; C08K 5/00(2006.01)i; C08L 101/00(2006.01)i; C08L 101/12(2006.01)i; C08L 79/00(2006.01)i; B32B 15/08(2006.01)i; B32B 15/18(2006.01)i; H01B 1/12(2006.01)i; H01B 1/20(2006.01)i; H01B 5/02(2006.01)i; C23C 26/00(2006.01)i
FI: C08L101/12; C08L101/00; C08L79/00 A; C08K5/00; H01B1/20 A; H01B1/12 G; B32B15/08 N; B32B15/18; B32B27/06; C23C26/00 A; H01B5/02 A

According to International Patent Classification (IPC) or to both national classification and IPC

B. FIELDS SEARCHED

Minimum documentation searched (classification system followed by classification symbols)
B32B27/06; C08K5/00; C08L101/00; C08L101/12; C08L79/00; B32B15/08; B32B15/18; H01B1/12; H01B1/20; H01B5/02; C23C26/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-533580 A (PANIPOL OY) 11.11.2003 (2003-11-11) claims, method B, examples 6, 9 | 1-12<br>1-12 |
| X<br>Y | KR 10-2010-0097781 A (LEE, Dong-Bok) 06.09.2010 (2010-09-06) claims, examples | 1-12<br>1-12 |
| X<br>A | JP 6-128769 A (JAPAN CARLIT CO., LTD.) 10.05.1994 (1994-05-10) claims, examples | 1-2, 4-5, 7-12<br>3, 6 |
| X | WO 2014/106949 A1 (IDEMITSU KOSAN CO., LTD.) 10.07.2014 (2014-07-10) claims, examples, paragraph [0180] | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 May 2020 (13.05.2020) | 26 May 2020 (26.05.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/010857

C (Continuation). DOCUMENTS CONSIDERED TO BE RELEVANT

| Category* | Citation of document, with indication, where appropriate, of the relevant passages | Relevant to claim No. |
|---|---|---|
| X | WO 2015/019596 A1 (IDEMITSU KOSAN CO., LTD.) 12.02.2015 (2015-02-12) claims, examples, paragraph [0102] | 1-12 |
| Y | JP 5-320958 A (JAPAN CARLIT CO., LTD.) 07.12.1993 (1993-12-07) claims, examples | 1-12 |
| Y | JP 2006-249128 A (SHIN-ETSU POLYMER CO., LTD.) 21.09.2006 (2006-09-21) claims, examples, paragraphs [0004], [0034] | 1-12 |
| A | JP 11-203937 A (INTERNATIONAL BUSINESS MACHINES CORP.) 30.07.1999 (1999-07-30) claims 25-28 | 1-12 |

Form PCT/ISA/210 (continuation of second sheet) (January 2015)

**INTERNATIONAL SEARCH REPORT**
Information on patent family members

International application No.
PCT/JP2020/010857

| Patent Documents referred in the Report | Publication Date | Patent Family | Publication Date |
|---|---|---|---|
| JP 2003-533580 A | 11 Nov. 2003 | US 6600644 B1<br>claims, method B, example 6<br>WO 2001/088047 A1<br>EP 1286034 A2<br>CN 1429268 A | |
| KR 10-2010-0097781 A | 05 Sep. 2010 | (Family: none) | |
| JP 6-128769 A | 10 May 1994 | (Family: none) | |
| WO 2014/106949 A1 | 10 Jul. 2014 | JP 2014-132104 A<br>claims, examples<br>JP 2014-133909 A<br>TW 201441361 A | |
| WO 2015/019596 A1 | 12 Feb. 2015 | TW 201610274 A<br>claims, examples | |
| JP 5-320958 A | 07 Dec. 1993 | (Family: none) | |
| JP 2006-249128 A | 21 Sep. 2006 | TW 200706461 A<br>claims, examples | |
| JP 11-203937 A | 30 Jul. 1999 | SG 71862 A<br>claims 25-28<br>TW 665746 B<br>KR 10-1999-0036643 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007324143 A
- JP 2011099152 A


### Non-patent literature cited in the description


- Electrochemistry Handbook. Electrochemical Society of Japan, 77